# EUROPÄISCHE PATENTSCHRIFT

(11) **EP 2 272 691 B1**
(45) Veröffentlichungstag und Bekanntmachung des Hinweises auf die Patenterteilung: **25.09.2013**
(21) Anmeldenummer: 10006303.1
(22) Anmeldetag: 17.06.2010
(51) Int. Cl.: B60D 1/30, B60D 1/58, B60R 1/00, B60T 8/17, B62D 49/06

(54) **Verfahren zum Bestimmen einer Position eines an einem Fahrzeug angehängten Anhängers relativ zum Fahrzeug sowie Fahrerassistenzsystem für ein Farhzeug**
Method for determining a position of a trailer attached to a vehicle relative to the vehicle and driver assistance system for a vehicle
Procédé de détermination de la position d'une remorque accrochée à un véhicule par rapport au véhicule et système d'assistance au conducteur pour un véhicule

(30) Priorität: 07.07.2009 DE 102009032024
(43) Veröffentlichungstag der Anmeldung: 12.01.2011
(73) Patentinhaber: Valeo Schalter und Sensoren GmbH, 74321 Bietigheim-Bissingen (DE)
(72) Erfinder: Jecker, Nicolas, 73730 Esslingen (DE)

(56) Entgegenhaltungen:
- EP-A1- 1 593 552
- DE-A1- 19 901 953
- US-A1- 2009 005 932

## Beschreibung

Die Erfindung betrifft ein Verfahren zum Bestimmen einer Position eines an einem Fahrzeug angehängten Anhängers relativ zum Fahrzeug, bei welchem mittels an gegenüberliegenden Längsseiten des Fahrzeugs angeordneten Detektorvorrichtungen jeweils ein an gegenüberliegenden Seiten des Anhängers ausgebildeter Bereich erfasst wird. Des Weiteren betrifft die Erfindung eine Fahrerassistenzeinrichtung bzw. ein Fahrerassistenzsystem für ein Fahrzeug, welche mehrere Detektorvorrichtungen umfasst.

Aus der DE 10 2008 029 612 A1 wird eine Position eines Anhängers relativ zum Zugfahrzeug durch Kameras, die in den Außenspiegeln des Zugfahrzeugs angeordnet sind, bestimmt. Es wird hier jedoch lediglich der Gierwinkel des Anhängers, d. h. der Winkel um eine vertikale Achse des Anhängers bestimmt.

Des Weiteren ist aus der EP 1 593 522 A1 bekannt, den Wankwinkel eines Anhängers, welcher an einem Zugfahrzeug angehängt ist, zu bestimmen, wobei dazu lediglich eine einzige mittig angeordnete Rückfahrkamera ausgebildet ist. Die Position des Anhängers kann dadurch nur relativ ungenau bestimmt werden.

Es ist Aufgabe der vorliegenden Erfindung, ein Verfahren sowie ein Fahrerassistenzsystem zu schaffen, mit welchem die Positionsbestimmung eines Anhängers relativ zum Fahrzeug genauer erfolgen kann.

Diese Aufgabe wird durch ein Verfahren, welches die Merkmale nach Anspruch 1 aufweist, und ein Fahrerassistenzsystem, welches die Merkmale nach Anspruch 15 aufweist, gelöst.

Bei dem erfindungsgemäßen Verfahren zum Bestimmen einer Position eines an einem Fahrzeug angehängten Anhängers relativ zum Fahrzeug werden mittels an gegenüberliegenden Längsseiten des Fahrzeug angeordneten Detektorvorrichtungen jeweils ein an gegenüberliegenden Seiten des Anhängers ausgebildeter Bereich des Anhängers erfasst. Zur Positionsbestimmung des Anhängers relativ zum Fahrzeug wird ein Verkippt-sein des Anhängers um die Längsachse des Anhängers bestimmt. Bei dem erfindungsgemäßen Verfahren wird somit erkannt, ob der Anhänger insbesondere gegenüber einer die Längsachse aufweisenden Ebene, insbesondere einer horizontalen Ebene auf eine Seite gekippt ist. Indem eine Mehrzahl von Detektorvorrichtungen angeordnet ist, kann gerade diese unterschiedliche Bereichserfassung an verschiedenen Stellen des Anhängers ermöglicht werden und es kann darüber hinaus durch genau eine derartig spezifische Positionsbestimmung im Hinblick auf ein Verkippt-sein auch diesbezüglich eine sehr genaue Bestimmung erfolgen. Mit einer derartig spezifischen Vorgehensweise im Hinblick auf die Positionsbestimmung können insbesondere kritische Situationen vermieden werden, in denen ein Reifen des Anhängers Luft verliert und dadurch von einer Seite nach unten geneigt gegenüber der anderen Seite sich befindet. Es kann darüber hinaus auch ein sehr zuverlässiges und schnelles Vorgehen erreicht werden, so dass gerade bei einem Druckverlust in einem Reifen und einem möglicherweise einhergehenden sicherheitskritischen Führen des Anhängers sehr schnell reagiert werden kann. Darüber hinaus kann gerade durch diese spezifische Positionserkennung eines Verkippt-seins des Anhängers auch eine sehr schnelle Reaktion, insbesondere beim Rückwärtsfahren des Fahrzeugs mit dem Anhänger und einem aufgrund des Verkippt-seins möglicherweise resultierenden unerwünschten Ausscheren des Anhängers vermieden werden. Auch diesbezüglich können kritische Fahrmanöver vermieden werden und gerade bei Rückwärtsfahrten vom Fahrer nicht gleich zu erkennende oder gar nicht zu erkennende unerwünschte Positionen des Anhängers schnell erfasst und mitgeteilt werden.

Es wird vorgesehen, dass vor dem Bestimmen der Position des Anhängers im Hinblick auf ein Verkippt-sein geeignete Referenz-Zielmuster am Anhänger gesucht werden, anhand denen das Bestimmen des Verkippt-seins dann bestimmt werden, wobei diese Referenz-Zielmuster durch die Detektorvorrichtungen selbstständig gesucht werden, insbesondere abhängig von der Ausgestaltung eines Anhängers gesucht werden. Es ist somit ein Automatismus geschaffen, bei dem die Detektorvorrichtungen Bereiche vom Anhänger erfassen, welche an gegenüberliegenden Seiten quasi gleich ausgebildet sind und somit sehr vorteilhaft für einen Vergleich sind. Insbesondere sind die Detektorvorrichtungen so ausgebildet, dass sie bei unterschiedlichen Anhängern auch automatisch jeweils besonders geeignete Referenz-Zielmuster individuell auswählen können. Durch diese Vorgehensweise wird in besonders vorteilhafter Form ein sehr schnelles und präzises Bestimmen einer Position im Hinblick auf ein Verkippt-sein des Anhängers ermöglicht.

Vorzugsweise werden die Referenz-Zielmuster während der Fahrt und/oder bereits mit dem Anhängen des Anhängers an das Fahrzeug und/oder mit der Aktivierung der Zündung des Fahrzeugs durch die Detektorvorrichtungen gesucht. Es können somit sehr situationsspezifische Ausgestaltungen bereitgestellt werden, wobei durch ein Suchen derartiger Referenz-Zielmuster mehrmals zu unterschiedlichen Zeitpunkten oder zu unterschiedlichen Situationen sogar auch eine Plausibilisierung geschaffen werden kann.

Vorzugsweise werden anhand der Referenz-Zielmuster die beiden Detektorvorrichtungen kalibriert. Die Genauigkeit kann dadurch nochmals wesentlich erhöht werden.

Beim Bestimmen eines Verkippt-seins wird durch eine erste Detektorvorrichtung an einer ersten Seite des Fahrzeugs ein erstes Ist-Zielmuster von dem ersten Referenz-Zielmuster an einer ersten Seite des Anhängers erfasst, und durch eine zweite Detektorvorrichtung an einer zweiten Seite des Fahrzeugs einem ersten Ist-Zielmuster entsprechendes zweites Ist-Zielmuster von dem zweiten Referenz-Zielmuster an einer zweiten Seite des Anhängers erfasst, wobei die beiden Ist-Zielmuster verglichen werden und abhängig von dem Vergleich ein Verkippt-sein des Anhängers bestimmt wird. Nachdem also die Referenz-Zielmuster eines Anhängers festgelegt sind, wird dann im Nachfolgenden zumindest einmal in diesem Bereich des Anhängers mit den Detektorvorrichtungen jeweils eine Aufnahme gemacht, welche dann zu dem momentanen Zeitpunkt die Ist-Zielmuster sind. Der Vergleich dieser Ist-Zielmuster gibt eine sehr präzise Aussagemöglichkeit darüber, ob ein Verkippt-sein des Anhängers um seine Längsachse und somit ein Neigen zur Seite hin vorliegt.

Vorzugsweise werden die Ist-Zielmuster im Hinblick auf ihre positionelle Übereinstimmung in der jeweiligen Aufnahme der Detektorvorrichtung verglichen, und abhängig von einer derartigen relativen Abweichung wird der Grad des Verkippt-seins des Anhängers bestimmt. Sind somit spezifische Merkmale, die in beiden Zielmustern vorhanden sind, insbesondere im Hinblick auf ihr Höhenniveau in der Aufnahme an unterschiedlichen Stellen, so kann sehr einfach und dennoch präzise auf ein Verkippt-sein des Anhängers geschlossen werden und sogar relativ präzise die tatsächliche Neigung des Verkippt-seins bestimmt werden.

Vorzugsweise wird die Positionsbestimmung des Anhängers während der Fahrt durchgeführt und zur Bestimmung der Zielmuster werden durch zumindest eine Detektorvorrichtung, insbesondere durch alle Detektorvorrichtungen, jeweils eine Mehrzahl von Aufnahmen von Ist-Zielmustern gemacht, wobei jeweils ein gemitteltes Ist-Zielmuster aus den Aufnahmen ermittelt wird und die gemittelten Ist-Zielmuster verglichen werden. Die besondere Vorteilhaftigkeit ergibt sich somit daraus, dass während der Fahrt auftretende Positionsänderungen des Anhängers aufgrund von Fahrbahnunebenheiten oder dergleichen berücksichtigt werden können. Die Mehrzahl von Aufnahmen von Ist-Zielmustern von zumindest einer Detektorvorrichtung können diese gegebenenfalls vorhandenen Positionsänderungen des Anhängers im Hinblick auf seine Höhenlage aufgrund von Fahrbahnunebenheiten oder dergleichen sehr gut kompensiert werden, so dass nicht unerwünschte Fehleinschätzungen eines Verkippt-seins auftreten. Dies erfolgt insbesondere durch ein Mitteln der Mehrzahl von Ist-Zielmustern im Hinblick auf die jeweilige Position von kennzeichnenden Merkmalen in den Zielmustern insbesondere auf deren Höhenposition in der jeweils getätigten Aufnahme.

Vorzugsweise werden zur Mittlung eines gemittelten Ist-Zielmusters die jeweiligen Positionen des Zielmusters in der Aufnahme bestimmt und diese werden dann gemittelt, wobei aus den gemittelten Ist-Zielmustern der zumindest zwei Detektorvorrichtungen ein Kippwinkel des Anhängers gegenüber einer sich zwischen den Referenz-Zielmustern erstreckenden Referenzlinie bestimmt wird.

Vorzugsweise wird die Referenzlinie vor dem Anfahren des Fahrzeugs bestimmt, insbesondere wenn die Referenz-Zielmuster bestimmt sind.

Insbesondere wird vorgesehen, dass bei Überschreiten eines Schwellwerts des Verkippt-seins eine Warnung an den Fahrer erzeugt wird.

Zusätzlich ist vorzugsweise vorgesehen, dass zur Positionsbestimmung auch ein Verkippt-sein des Anhängers um seine Vertikalachse bestimmt wird. Diesbezüglich wird somit auch ein Gierwinkel des Anhängers bestimmt. Insbesondere wird in diesem Zusammenhang somit ein Verkippt-sein des Anhängers um seine Vertikalachse im Vergleich zu einer Referenzposition, wenn der Anhänger im vollständigen Geradeauslauf sich befindet, bestimmt.

Vorzugsweise wird abhängig von dem Bestimmen des Verkippt-seins ein Luftdruckverlust in einem Reifen des Anhängers bestimmt, und insbesondere dann eine spezifische Warnung an den Fahrer erzeugt.

Bevorzugt wird auch vorgesehen, dass das Bestimmen des Verkippt-seins beim rückwärtigen Einparken des Gespanns mit dem Fahrzeug und dem Anhänger in einer Parklücke durchgeführt wird.

Insbesondere wird das Einparken durch ein Parkassistenzsystem automatisch unterstützt und eine Parkbahn wird abhängig von dem Verkippt-sein bestimmt und/oder eine Parkbahn wird abhängig von einem Verkippt-sein während des Parkvorgangs verändert.

Es wird somit auch eine Vorgehensweise ermöglicht, mit der beim Rückwärtsfahren genauere Informationen über die Position des Anhängers zur Verfügung gestellt werden können, um das Rückwärtsfahren, insbesondere ein Einparken noch besser unterstützen zu können, insbesondere dann, wenn ein Fahrzeug mit einem angehängten Anhänger eingeparkt werden soll. So kann dies besonders vorteilhaft bei zweiachsigen und zweispurigen Personenkraftwagen genutzt werden, bei denen beispielsweise ein Transportanhänger oder ein Wohnwagen oder dergleichen angehängt ist. Es kann jedoch auch bei Lastkraftwagen verwendet werden, bei denen Transportanhänger angehängt sind.

Vorzugsweise wird beim Vorwärtsfahren des Fahrzeugs mit dem angehängten Anhänger durch die insbesondere als Kameras ausgebildeten Detektorvorrichtungen, die zur Bildaufnahme im für den Menschen sichtbaren Spektralbereich ausgebildet sind, ausgewertet, sodass Referenz-Zielmuster des Anhängers ermittelt werden. So lernt das System jeden spezifischen Anhänger quasi kennen und kann diesbezüglich dann nur relativ kleine Bildbereiche als Zielmuster auswerten. Dadurch kann die Bildverarbeitung auch sehr schnell erfolgen.

Ist eine derartige Referenz-Zielmuster Bestimmung vollzogen, werden diese im Weiteren bei der Positionsbestimmung des Anhängers beispielsweise beim Rückwärtsfahren des Gespanns verfolgt und Ist-Zielmuster bestimmt. Indem zumindest zwei Detektorvorrichtungen an gegenüberliegenden Seiten des Fahrzeugs, insbesondere in Außenspiegeln des Fahrzeugs verwendet werden, können auch sehr große Winkel vermessen und erfasst werden. So kann auch dann, wenn eine Kamera den Anhänger nicht erfasst, die andere Kamera diesen weiter beobachten.

Der ermittelte Kippwinkel beim Auftreten eines Verkippt-seins eines Anhängers kann dem Fahrer mitgeteilt werden, wobei in diesem Zusammenhang auch eine bildhafte Darstellung auf einer Anzeigeeinheit im Fahrzeug erfolgen kann, sodass die Schieflage des Anhängers um seine Längsachse auch bildhaft dargestellt werden kann. Besonders vorteilhaft ist die Verwendung dieser Information des Verkippt-seins des Anhängers um seine Längsachse bei einer Bahnbestimmung zum Einparken des Gespanns, sodass diese Parkbahn ganz explizit auch von dieser Information abhängig bestimmt wird und somit das zumindest semi-autonome Durchführen des Parkvorgangs verbessert werden kann. Prinzipiell kann die Informationsbestimmung des Verkippt-seins des Anhängers jedoch auch bei passiven Lenksystemen eines Fahrzeugs, bei denen eben gerade kein semi-autonomer oder voll-autonomer Parkvorgang durchgeführt wird, verwendet werden.

Zusätzlich oder unabhängig davon ist die Information über das Verkippt-sein des Anhängers auch sehr hilfreich als Zustandsmitteilung an den Fahrer betreffend einen Druckverlust in einem Reifen des Anhängers und/oder einem Verrutschen der Ladung auf dem Anhänger oder einem Überladen auf einer Seite des Anhängers oder dergleichen. Dadurch können sicherheitskritische Verkehrssituationen vermieden werden.

Wenn sich die beiden insbesondere als Kameras ausgebildeten Detektorvorrichtungen kalibriert haben, wird vorzugsweise einfach anhand der geometrischen Einbaulage der Kameras die relative Position der Ist-Zielmuster ermittelt und daraus ein Kippwinkel des Anhängers insbesondere gegenüber der horizontalen Ebene ermittelt. Vorzugsweise kann dies beispielsweise über eine Mittelung des Winkels über ein Zeitfenster erfolgen. Die Unebenheiten der Fahrbahn können dadurch sehr gut kompensiert werden. Wenn der Anhänger bereits beim Anfahren schief steht, kann dies als Hinweis gesehen werden, dass er beispielsweise einseitig beladen ist.

Ein erfindungsgemäßes Fahrerassistenzsystem für ein Fahrzeug ist zum Bestimmen einer Position eines an einem Fahrzeug angehängten Anhängers relativ zum Fahrzeug ausgebildet. Das Fahrerassistenzsystem umfasst eine erste und eine zweite Detektorvorrichtung, die an gegenüberliegenden Längsseiten des Fahrzeugs anbringbar sind und mittels welchen jeweils ein an gegenüberliegenden Seiten des Anhängers ausgebildeter Bereich erfasst ist. Die Detektorvorrichtungen sind zum Bestimmen eines Verkippt-seins des Anhängers um seine Längsachse ausgebildet.

Vorteilhafte Ausführungen des erfindungsgemäßen Verfahrens und als vorteilhafte Ausgestaltungen der erfindungsgemäßen Fahrerassistenzeinrichtung bzw. des Fahrerassistenzsystems.

Weitere Merkmale der Erfindung ergeben sich aus den Ansprüchen, den Figuren und der Figurenbeschreibung. Die vorstehend in der Beschreibung genannten Merkmale und Merkmalskombinationen sowie der nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung so wie in den Ansprüchen angegeben zu verlassen.

Ausführungsbeispiele der Erfindung werden nachfolgend anhand schematischer Zeichnungen näher erläutert. Es zeigen:
- Fig. 1: eine schematische Draufsicht auf ein Fahrzeug mit einem angehängten Anhänger;
- Fig. 2: eine schematische erste Seitenansicht eines Fahrzeugs mit einem angehängten Anhänger in einer ersten Phase der Positionsbestimmung des Anhängers;
- Fig. 3: eine schematische Seitenansicht gemäß Fig. 1 in einer weiteren Phase der Positionsbestimmung des Anhängers;
- Fig. 4: eine schematische Ansicht der gegenüberliegenden Seite des Fahrzeugs und des Anhängers in der Phase der Positionsbestimmung des Anhängers gemäß Fig. 2; und
- Fig. 5: eine schematische Seitenansicht des Fahrzeugs und des angehängten Anhängers mit einer weiteren spezifischen Position des Anhängers relativ zum Fahrzeug.

In den Figuren werden gleiche oder funktionsgleiche Elemente mit den gleichen Bezugszeichen versehen.

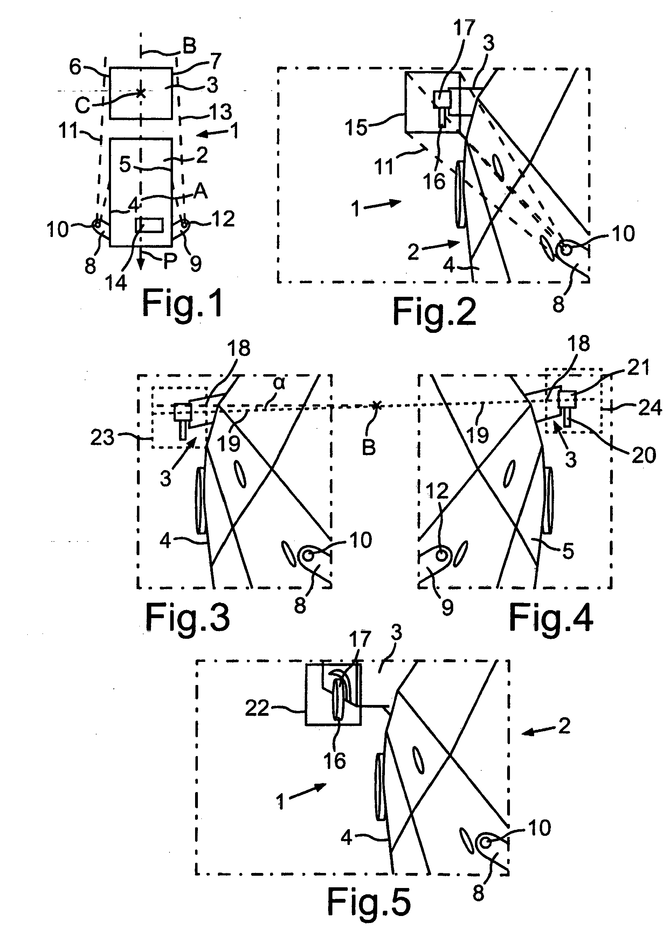

In Fig. 1 ist in einer vereinfachten schematischen Darstellung eine Draufsicht auf ein Gespann 1 gezeigt, welches ein Fahrzeug 2 und einen daran angehängten Anhänger 3 aufweist. Das Fahrzeug 2 ist im Ausführungsbeispiel ein Personenkraftwagen, welcher zweispurig und zweiachsig ausgebildet ist. Das Fahrzeug 2 umfasst eine Längsachse A, wobei der Anhänger 3 eine Längsachse B aufweist. Darüber hinaus ist eine Vertikalachse C des Anhängers 3 eingezeichnet, welche sich senkrecht zur Figurenebene erstreckt. In Fahrtrichtung P betrachtet und somit von der Position des Fahrers aus betrachtet, weist das Fahrzeug 2 eine rechte Längsseite 4 und eine linke Längsseite 5 auf. Entsprechend weist der Anhänger 3 eine rechte Seite 6 und eine linke Seite 7 auf. Die Längsachsen A und B erstrecken sich in der Figurenebene und somit insbesondere bei dreidimensionaler Betrachtung und reellem Fortbewegen des Gespanns 1 auf einer Fahrbahn in einer horizontalen Ebene enthalten. Das Fahrzeug 2 umfasst darüber hinaus seitliche Außenspiegel 8 und 9. In dem rechten Außenspiegel 8 ist eine erste Detektorvorrichtung 10 angeordnet, deren Erfassungsbereich 11 symbolisch angedeutet ist. Entsprechend ist in dem linken Außenspiegel 9 eine zweite Detektorvorrichtung 12 angeordnet, deren Erfassungsbereich 13 ebenfalls schematisch angedeutet ist. Das Fahrzeug 1 umfasst darüber hinaus eine Fahrerassistenzeinrichtung bzw. ein Fahrerassistenzsystem 14, welches die Detektorvorrichtungen 10 und 12 umfasst. Darüber hinaus umfasst das Fahrerassistenzsystem 14 eine Mehrzahl von weiteren Sensoren, welche zur Umfelderfassung des Fahrzeugs 1 ausgebildet sind. Insbesondere sind diese Sensoren Ultraschall-Sensoren und das Fahrerassistenzsystem 14 ist diesbezüglich zur Erkennung einer Parklücke und zum Durchführen eines zumindest semi-autonomen Parkvorgangs für das Fahrzeug 2 oder das gesamte Gespann 1 ausgebildet. Die Detektorvorrichtungen 10 und 12 sind insbesondere Kameras, welche im für den Menschen sichtbaren Spektralbereich sensitiv sind und zur Bildaufnahme ausgebildet sind.

Das Fahrerassistenzsystem 14 ist darüber hinaus zum Bestimmen einer Position des an dem Fahrzeug 2 angehängten Anhängers 3 relativ zu dem Fahrzeug 2 ausgebildet. Dazu werden mittels den als Kameras ausgebildeten Detektorvorrichtungen 10 und 12, die an gegenüberliegenden Längsseiten 4 und 5 des Fahrzeugs 1 angeordnet sind, gegenüberliegende Bereiche an den Längsseiten 6 und 7 des Anhängers 3 erfasst. Die Fahrerassistenzeinrichtung bzw. das Fahrerassistenzsystem 14 ist zur Positionsbestimmung eines Verkippt-seins eines Anhängers 3 um seine Längsachse B ausgebildet. Dies bedeutet, dass ein Verkippt-sein gegenüber der Figurenebene um die Längsachse B feststellbar ist. Dies kann beispielsweise aufgrund eines Luftdruckverlusts in einem Reifen des Anhängers 3 und aufgrund einer Verschiebung der Ladung auf dem Anhänger 3 oder einer grundsätzlichen einseitigen Beladung des Anhängers 3 erfolgen.

Darüber hinaus ist im Ausführungsbeispiel vorgesehen, dass das Fahrerassistenzsystem 14 zur Positionsbestimmung des Anhängers 3 im Hinblick auf ein Verdreht-sein um die Vertikalachse C ausgebildet ist. Es kann also zum einen der Wankwinkel des Anhängers 3 und zum anderen der Gierwinkel des Anhängers 3 bestimmt werden. Dies im Hinblick auf die relative Position zum Fahrzeug 2.

Vor dem Bestimmen der Position des Anhängers 3 im Hinblick auf ein Verkippt-sein um seine Längsachse B mittels den Detektorvorrichtungen 10 und 12 werden geeignete Referenz-Zielmuster am Anhänger 3 bestimmt, anhand denen das Bestimmen des Verkippt-seins durch davon gemachte Ist-Zielmuster bestimmt werden. In Fig. 2 ist dies beispielhaft und schematisch für die Detektorvorrichtung 10 auf der Längsseite 4 des Fahrzeugs 2 gezeigt. Die Detektorvorrichtung 10 erkennt automatisch ein geeignetes Referenz-Zielmuster, welches in Fig. 2 durch das Bezugszeichen 15 gekennzeichnet ist. Das Referenz-Zielmuster 15 ist spezifisch für den Anhänger 3 und zeigt im Ausführungsbeispiel einen Reifen 16 und eine Radschutzabdeckung 17. Diese beispielhaft genannten Komponenten des Anhängers 3 sind in dem Referenz-Zielmuster 15 insbesondere örtlich an spezifischer Stelle erkannt. In analoger Weise wird ein entsprechendes Referenz-Zielmuster durch die Detektorvorrichtung 12 an der gegenüberliegenden Längsseite 7 des Anhängers 3 detektiert. Anhand der beiden Referenz-Zielmuster 15 werden dann die beiden Detektorvorrichtungen 10 und 12 kalibriert.

Zur Positionsbestimmung im Hinblick auf ein Verkippt-sein des Anhängers 3 um seine Längsachse B nach dem Bestimmen der Referenz-Zielmuster beispielsweise bei weiterer Vorwärtsfahrt des Gespanns 1 wird vorzugsweise mehrmals mit der ersten Detektorvorrichtung 10 eine Aufnahme durchgeführt und dadurch mehrere Ist-Zielmuster dieses Referenz-Zielmusters 15 aufgenommen. Aufgrund der Fortbewegung des Gespanns 1 auf der Fahrbahn, auf der auch Unebenheiten auftreten können und dadurch die beispielhaft genannten Merkmale in Form des Reifens 16 und der Radschutzabdeckung 17 von unterschiedlichen Positionen innerhalb des Ist-Zielmusters, insbesondere im Hinblick auf die Höhe innerhalb des Ist-Zielmusters verschieden sein können, wird vorzugsweise eine Mittelung dieser Mehrzahl von Ist-Zielmustern durchgeführt und ein gemitteltes Ist-Zielmuster bestimmt. Entsprechend wird dies mit der Mehrzahl der Aufnahmen von Ist-Zielmustern von dem zweiten Referenz-Zielmuster durch die Detektorvorrichtung 12 vollzogen, wobei insbesondere die Positionen der Teile 16 und/oder 17 in den Ist-Zielmustern gemittelt werden, insbesondere deren Höhenpositionen.

Die beiden gemittelten Ist-Zielmuster werden in einer Auswerteeinheit des Fahrassistenzsystems 14 verglichen.

In Fig. 3 und Fig. 4 ist beispielhaft eine Situation gezeigt, bei der ein Verkippt-sein des Anhängers 3 gegenüber der horizontalen Ebene nach links folgt, was bedeutet dass die rechte Längsseite 6 des Anhängers 3 im Vergleich zur linken Seite 7 weiter nach unten geneigt ist. Dies kann beispielsweise aufgrund eines Luftdruckverlusts im Reifen 16 der Fall sein. Anhand der Referenz-Zielmuster und der gemittelten Ist-Zielmuster 23 und 24 wird aufgrund des Vergleichs dieses Verkippt-seins erkannt. Insbesondere kann auch der Kippwinkel bestimmt werden, wobei die Mittelung des Winkels auch über ein Zeitfenster erfolgen kann. In den Darstellungen gemäß Fig. 3 und Fig. 4 ist eine Referenzlinie 18 eingezeichnet, wobei zu erkennen ist, dass die Verbindungslinie 19, welche Bezugspunkte umfasst, die an den Seiten des Anhängers 3 innerhalb der Ist-Zielmuster 23 und 24 gleich ausgebildet sind, gegenüber dieser Referenzlinie 18 um einen Winkel α zur in Fahrtrichtung des Gespanns 1 rechten Seite hin nach unten geneigt ist. Es ist also ein Verkippt-sein um die Achse B gegeben. Durch diesen Kippwinkel α ist auch der Wankwinkel gegeben. Anhand dieses Vergleichs kann auch erkannt werden, ob ein Schwellwertwinkel überschritten ist und somit ein kritischer unerwünschter Fahrzustand auftreten kann. Dies kann dem Fahrer durch einen akustischen und/oder optischen Warnhinweis angezeigt werden und insbesondere auch auf einem Anzeigefeld bildhaft genau dieses Verkippt-sein des Anhängers 3 daher angezeigt werden. Prinzipiell kann somit bei einer gewöhnlichen Vorwärtsfahrt die Ausgestaltung auch als Warnsystem für einen Luftdruckverlust in einem Reifen oder einer Ladungsverschiebung auf dem Anhänger 3 oder dergleichen verwendet werden. Es kann jedoch auch zusätzlich oder anstatt dazu vorgesehen sein, dass die bei der Vorwärtsfahrt des Gespanns 1 gewonnene Informationen bei einem Rückwärtsfahren des Gespanns 1 verwendet werden, um auch diesbezüglich ein sicheres Manövrieren ermöglichen zu können. Es werden also bei Vorwärtsfahrten des Gespanns 1 konstante Muster im Bild gesucht, wodurch das Profil des Anhängers 3 erkannt werden kann und sehr schnell und präzise dies auch beispielsweise beim nachfolgenden Rückwärtsfahren verfolgt werden kann.

In Fig. 4 ist auch ein linker Reifen 20 des Anhängers 3 sowie eine Radschutzabdeckung 21 für den Reifen 20 gezeigt.

In Fig. 5 ist eine weitere schematische Darstellung eines Ausführungsbeispiels gezeigt, wobei ebenfalls hier beispielhaft nur die rechte Seite des Gespanns 1 dargestellt ist. Bei den erläuterten Ausführungen zu Fig. 2 bis 4 ist beispielhaft davon ausgegangen, dass der Anhänger 3 um seine Vertikalachse C nicht verdreht ist und somit die Längsachse B im Wesentlichen parallel zur Längsachse A verläuft. Es kann auch bei diesen Ausführungen vorgesehen sein, dass im Weiteren zusätzlich auch ein Verdrehen um die Vertikalachse C gegeben ist, so dass die Längsachse B und die Längsachse A nicht mehr parallel verlaufen.

In Fig. 5 ist ausgehend von der Darstellung in Fig. 2 zunächst ein Referenz-Zielmuster bestimmt und im Weiteren werden dann Ist-Zielmuster aufgenommen. Durch Vergleich der Ist-Zielmuster kann dann auch erkannt werden, ob sich der Anhänger 3 um seine Vertikalachse C in seiner Position verdreht hat, wobei dies beispielhaft in Fig. 5 dargestellt ist. Es ist bei dieser Darstellung zu erkennen, dass der Anhänger 3 in Fahrtrichtung gemäß der Darstellung in Fig. 1 betrachtet nach rechts ausgeschert ist bzw. nach rechts verdreht ist. Gerade bei einem rückwärtigen Bewegen des Gespanns 1 ist diese Positionserkennung besonders vorteilhaft, da sehr schnell und präzise erkannt werden kann, wenn der Anhänger 3 in unerwünschter Weise in eine Richtung ausschert und somit in unerwünschter Weise um die Vertikalachse C sich verdreht. Dies ist besonders vorteilhaft bei Einparkvorgängen, die rückwärts durchgeführt werden und insbesondere ist dies dann besonders vorteilhaft, wenn das Einparken durch ein Einparkassistenzsystem, welches von dem Fahrerassistenzsystem 14 umfasst ist, zumindest semi-autonom durchgeführt wird. Durch das Erkennen dieser Positionen des Anhängers 3 im Hinblick auf ein Verkippt-sein um die Achse B und/oder Verdreht-sein um die Achse B kann dies bereits vor dem Durchführen des zumindest semi-autonomen Parkvorgangs bei der Bestimmung der Parkbahn berücksichtigt werden und/oder auch dann noch während des Durchführens des Parkvorgangs zum Verändern der vorbestimmten Parkbahn berücksichtigt werden.

In Fig. 5 ist ein Ist-Zielmuster 22, welches insbesondere während eines rückwärtigen Einparkens durch die Detektorvorrichtung 10 aufgenommen wird, gezeigt.

## Patentansprüche

1. Verfahren zum Bestimmen einer Position eines an einem Fahrzeug (2) angehängten Anhängers (3) relativ zum Fahrzeug (2), bei welchem mittels an gegenüberliegenden Längsseiten (4, 5) des Fahrzeugs (2) angeordneten Detektorvorrichtungen (10, 12) jeweils ein an gegenüberliegenden Seiten (6, 7) des Anhängers (3) ausgebildeter Bereich erfasst wird,
**dadurch gekennzeichnet, dass**
zur Positionsbestimmung ein Verkippt-sein des Anhängers (3) um seine Längsachse (B) bestimmt wird wobei
• vor dem Bestimmen der Position des Anhängers (3) im Hinblick auf ein Verkippt-sein geeignete Referenz-Zielmuster (15) am Anhänger (3), anhand denen das Bestimmen des Verkippt-seins bestimmt wird, durch die Detektorvorrichtungen (10, 12) selbständig gesucht werden, insbesondere abhängig von der Ausgestaltung eines Anhängers (3) gesucht werden, und
• beim Bestimmen eines Verkippt-seins durch eine erste Detektorvorrichtung (10) an einer ersten Seite (4) des Fahrzeugs (2) ein erstes Ist-Zielmuster (23) von dem ersten Referenz-Zielmuster (15) an einer ersten Seite (6) des Anhängers (3) erfasst wird, und durch eine zweite Detektorvorrichtung (12) an einer zweiten Seite (5) des Fahrzeugs (2) ein dem ersten Ist-Zielmuster (23) entsprechendes zweites Ist-Zielmuster (24) von dem zweiten Referenz-Zielmuster an einer zweiten Seite (7) des Anhängers (3) erfasst wird, wobei die beiden Ist-Zielmuster (23, 24) verglichen werden und abhängig von dem Vergleich ein Verkippt-sein des Anhängers (3) bestimmt wird.

2. Verfahren nach Anspruch 1,
**dadurch gekennzeichnet, dass**
die Referenz-Zielmuster (15) während der Fahrt und/oder bereits mit dem Anhängen des Anhängers (3) an das Fahrzeug (2) und/oder mit der Aktivierung der Zündung des Fahrzeugs (2) durch die Detektorvorrichtungen (10, 12) gesucht werden.

3. Verfahren nach Anspruch 1 oder 2,
**dadurch gekennzeichnet, dass**
anhand der Referenz-Zielmuster (15) die beiden Detektorvorrichtung (10, 12) kalibriert werden.

4. Verfahren nach einem der vorhergehenden Ansprüche 1 bis 3,
**dadurch gekennzeichnet, dass**
die Ist-Zielmuster (23, 24) im Hinblick auf ihre positionelle Übereinstimmung in der jeweiligen Aufnahme der Detektorvorrichtung (10, 12) verglichen werden, und abhängig von einer derartigen relativen Abweichung der Grad des Verkippt-seins des Anhängers (3) bestimmt wird.

5. Verfahren nach einem der vorhergehenden Ansprüche 1 bis 4,
**dadurch gekennzeichnet, dass**
die Positionsbestimmung des Anhängers (3) während der Fahrt durchgeführt wird und zur Bestimmung der Zielmuster (23, 24) durch zumindest eine Detektorvorrichtung (10, 12), insbesondere alle Detektorvorrichtungen (10, 12), jeweils eine Mehrzahl von Aufnahmen von Ist-Zielmustern (23, 24) gemacht werden, wobei jeweils ein gemitteltes Ist-Zielmuster (23, 24) aus den Aufnahmen ermittelt wird und die gemittelten Ist-Zielmuster (23, 24) verglichen werden.

6. Verfahren nach Anspruch 5,
**dadurch gekennzeichnet, dass**
zur Ermittlung eines gemittelten Ist-Zielmusters (23, 24) die jeweiligen Positionen von Merkmalen (16, 17) in der Aufnahme bestimmt und diese dann gemittelt werden, wobei aus den gemittelten Ist-Zielmustern (23, 24) der zumindest zwei Detektorvorrichtungen (10, 12) ein Kippwinkel des Anhängers (3) gegenüber einer sich zwischen die Referenz-Zielmustern (15) erstreckenden Referenzlinie (18) bestimmt wird.

7. Verfahren nach Anspruch 6,
**dadurch gekennzeichnet, dass**
die Referenzlinie (18) vor dem Anfahren des Fahrzeugs (2) bestimmt wird.

8. Verfahren nach einem der vorhergehenden Ansprüche,
**dadurch gekennzeichnet, dass**
bei Überschreiten eines Schwellwerts des Verkippt-seins eine Warnung an den Fahrer erzeugt wird.

9. Verfahren nach einem der vorhergehenden Ansprüche,
**dadurch gekennzeichnet, dass**
zur Positionsbestimmung ein Verkippt-sein des Anhängers (3) um seine Vertikalachse (C) bestimmt wird.

10. Verfahren nach einem der vorhergehenden Ansprüche,
**dadurch gekennzeichnet, dass**
abhängig von dem Bestimmen des Verkippt-seins ein Luftdruckverlust in einem Reifen (16, 20) des Anhängers (3) bestimmt wird, und insbesondere dann eine spezifische Warnung an den Fahrer erzeugt wird.

11. Verfahren nach einem der vorhergehenden Ansprüche,
**dadurch gekennzeichnet, dass**
das Bestimmen des Verkippt-seins beim rückwärtigen Einparken des Gespanns (1) mit dem Fahrzeug (2) und dem Anhänger (3) in eine Parklücke durchgeführt wird.

12. Verfahren nach Anspruch 11,
**dadurch gekennzeichnet, dass**
das Einparken durch ein Parkassistenzsystem automatisch unterstützt wird und eine Parkbahn abhängig von dem Verkippt-sein bestimmt wird und/oder abhängig die Parkbahn von einem Verkippt-sein während des Parkvorgangs verändert wird.

13. Fahrerassistenzsystem für ein Fahrzeug (2), welches zum Bestimmen einer Position eines an dem Fahrzeug (2) angehängten Anhängers (3) relativ zum Fahrzeug (2) ausgebildet ist, und eine erste und eine zweite Detektorvorrichtung (10, 12) umfasst an gegenüberliegenden Längsseiten (4, 5) des Fahrzeugs (2) anbringbar sind und mittels welchen jeweils ein an gegenüberliegenden Seiten (6, 7) des Anhängers (3) ausgebildeter Bereich erfasst ist,
**dadurch gekennzeichnet, dass**
die Detektorvorrichtungen (10, 12)
• zum Bestimmen eines Verkippt-seins des Anhängers (3) um seine Längsachse (B) ausgebildet sind, und
• vor dem Bestimmen der Position des Anhängers (3) im Hinblick auf ein Verkippt-sein geeignete Referenz-Zielmuster (15) am Anhänger (3), anhand denen das Bestimmen des Verkippt-seins bestimmbar ist, zum selbständig Suchen, insbesondere abhängig von der Ausgestaltung eines Anhängers (3) ausgebildet sind, und
• mittels welchen zum Bestimmen eines Verkippt-seins an einer ersten Seite (4) des Fahrzeugs (2) ein erstes Ist-Zielmuster (23) von dem ersten Referenz-Zielmuster (15) an einer ersten Seite (6) des Anhängers (3) durch den erste Detektorvorrichtung (10) erfassbar ist, und an einer zweiten Seite (5) des Fahrzeugs (2) ein dem ersten Ist-Zielmuster (23) entsprechendes zweites Ist-Zielmuster (24) von dem zweiten Referenz-Zielmuster an einer zweiten Seite (7) des Anhängers (3) durch den zweite Detektorvorrichtung (12) erfassbar ist, wobei die beiden Ist-Zielmuster (23, 24) verglichen werden und abhängig von dem Vergleich ein Verkippt-sein des Anhängers (3) bestimmbar ist.

## Claims

1. Method for determining a position of a trailer (3), attached to a vehicle (2), relative to the vehicle (2), in which method in each case a region which is formed on opposite sides (6, 7) of the trailer (3) is detected by means of detector devices (10, 12) arranged on opposite longitudinal sides (4, 5) of the vehicle (2),
**characterized in that**,
in order to determine the position, a tilted state of the trailer (3) about its longitudinal axis (B) is determined, wherein
• before the position of the trailer (3) is determined, reference target patterns (15) on the trailer (3), which are suitable with respect to a tilted state and on the basis of which the tilted state is determined, are continuously searched for by the detector devices (10, 12), in particular are searched for as a function of the configuration of a trailer (3), and
• when a tilted state is determined by a first detector device (10) on a first side (4) of the vehicle (2), a first actual target pattern (23) is detected by the first reference target pattern (15) on a first side (6) of the trailer (3), and a second actual target pattern (24), corresponding to the first actual target pattern (23) of the second reference target pattern on a second side (7) of the trailer (3) is detected by a second detector device (12) on a second side (5) of the vehicle (2), wherein the two actual target patterns (23, 24) are compared, and a tilted state of the trailer (3) is determined as a function of the comparison.

2. Method according to Claim 1,
**characterized in that**
the reference target pattern (15) is searched for by the detector devices (10, 12) during the journey and/or as soon as the trailer (3) is attached to the vehicle (2) and/or as soon as the ignition of the vehicle (2) is activated.

3. Method according to Claim 1 or 2,
**characterized in that**
the two detector devices (10, 12) are calibrated on the basis of the reference target patterns (15).

4. Method according to one of the preceding Claims 1 to 3,
**characterized in that**
the actual target patterns (23, 24) are compared with respect to their positional correspondence in the respective recording of the detector device (10, 12), and the degree of the tilted state of the trailer (3) is determined as a function of such a relative deviation.

5. Method according to one of the preceding Claims 1 to 4,
**characterized in that**
the determination of the position of the trailer (3) is carried out during the journey and, in order to determine the target patterns (23, 24) by means of at least one detector device (10, 12), in particular all the detector devices (10, 12) in particular a multiplicity of recordings of actual target patterns (23, 24) are made, wherein in each case an averaged actual target pattern (23, 24) is determined from the recordings and the averaged actual target patterns (23, 24) are compared.

6. Method according to Claim 5,
**characterized in that**,
in order to determine an averaged actual target pattern (23, 24) the respective positions of features (16, 17) in the recording are determined and these are then averaged, wherein a tilting angle of the trailer (3) with respect to a reference line (18) which extends between the reference target patterns (15) is determined from the averaged actual target patterns (23, 24) of the at least two detector devices (10, 12).

7. Method according to Claim 6,
**characterized in that**
the reference line (18) is determined before the vehicle (2) is started.

8. Method according to one of the preceding claims, **characterized in that**
when a threshold value of the tilted state is exceeded, a warning to the driver is generated.

9. Method according to one of the preceding claims, **characterized in that**
in order to determine the position a tilted state of the trailer (3) about its vertical axis (C) is determined.

10. Method according to one of the preceding claims, **characterized in that**
an air pressure loss in a tyre (16, 20) of the trailer (3) is determined as a function of the determination of the tilted state, and in particular a specific warning to the driver is then generated.

11. Method according to one of the preceding claims, **characterized in that**
the determination of the tilted state is carried out during the reverse parking of the vehicle combination (1) with the vehicle (2) and the trailer (3) into a parking space.

12. Method according to Claim 11,
**characterized in that**
the parking is automatically assisted by a parking assistance system and a parking path is determined as a function of the tilted state and/or the parking path is changed as a function of a tilted state during the parking process.

13. Driver assistance system for a vehicle (2), which is designed to determine a position of a trailer (3), attached to the vehicle (2), relative to the vehicle (2), and comprises a first and a second detector device (10, 12) which can be attached on opposite longitudinal sides (4, 5) of the vehicle (2), by means of which detector devices (10, 12) in each case a region which is formed on opposite sides (6, 7) of the trailer (3) is detected,
**characterized in that**
the detector devices (10, 12)
• are designed to determine a tilted state of the trailer (3) about its longitudinal axis (B), and
• are designed to continuously search, before the determination of the position of the trailer (3), reference target patterns (15) on the trailer (3), which are suitable for a tilted state and on the basis of which the tilted state can be determined, in particular to search as a function of the configuration of a trailer (3), and
• by means of which, in order to determine a tilted state on a first side (4) of the vehicle (2), a first actual target pattern (23) of the first reference target pattern (15) on a first side (6) of the trailer (3) can be detected by the first detector device (10), and a second actual target pattern (24), corresponding to the first actual target pattern (23), of the second reference target pattern on a second side (7) of the trailer (3) can be detected by the second detector device (12) on a second side (5) of the vehicle (2), wherein the two actual target patterns (23, 24) are compared, and a tilted state of the trailer (3) can be determined as a function of the comparison.

## Revendications

1. Procédé pour déterminer une position d'une remorque (3) accrochée à un véhicule (2) par rapport au véhicule (2), selon lequel une zone respective formée sur des côtés opposés (6, 7) de la remorque (3) est balayée au moyen de dispositifs de détection (10, 12) disposés sur des côtés longitudinaux (4, 5) opposés du véhicule (2),
**caractérisé en ce que**
un état de basculement de la remorque (3) autour de son axe longitudinal (B) est déterminé en vue de déterminer la position,
* des modèles de cible de référence (15) appropriés sur la remorque (3), au moyen desquels est déterminée la détermination de l'état de basculement, étant recherchés automatiquement par les dispositifs de détection (10, 12), notamment recherchés en fonction de la configuration d'une remorque (3), avant la détermination de la position de la remorque (3) du point de vue d'une état de basculement, et
* lors de la détermination d'un état de basculement, un premier modèle de cible réel (23) du premier modèle de cible de référence (15) sur un premier côté (6) de la remorque (3) étant détecté par un premier dispositif de détection (10) sur un premier côté (4) du véhicule (2), et un deuxième modèle de cible réel (24) correspondant au premier modèle de cible réel (23) du deuxième modèle de cible de référence sur un deuxième côté (7) de la remorque (3) étant détecté par un deuxième dispositif de détection (12) sur un deuxième côté (5) du véhicule (2), les deux modèles de cible réels (23, 24) étant comparés et un état de basculement de la remorque (3) étant déterminé en fonction de la comparaison.

2. Procédé selon la revendication 1, **caractérisé en ce que** le modèle de cible de référence (15) est recherché par les dispositifs de détection (10, 12) pendant le déplacement et/ou déjà lors de l'accrochage de la remorque (3) au véhicule (2) et/ou lors de l'activation de l'allumage du véhicule (2).

3. Procédé selon la revendication 1 ou 2, **caractérisé en ce que** les deux dispositifs de détection (10, 12) sont calibrés au moyen du modèle de cible de référence (15).

4. Procédé selon l'une des revendications 1 à 3, **caractérisé en ce que** les modèles de cible réels (23, 24) sont comparés du point de vue de leur concordance positionnelle dans le relevé correspondant du dispositif de détection (10, 12) et le degré de l'état de basculement de la remorque (3) est déterminé en fonction d'un tel écart relatif.

5. Procédé selon l'une des revendications 1 à 4, **caractérisé en ce que** la détermination de la position de la remorque (3) est effectuée pendant le déplacement et en vue de déterminer le modèle de cible (23, 24) par au moins un dispositif de détection (10, 12), notamment par tous les dispositifs de détection (10, 12), une pluralité de relevés de modèles de cible réels (23, 24) est à chaque fois effectuée, un modèle de cible réel (23, 24) moyen étant à chaque fois déterminé à partir des relevés et les modèles de cible réels (23, 24) moyens étant comparés.

6. Procédé selon la revendication 5, **caractérisé en ce que** pour déterminer un modèle de cible réel (23, 24) moyen, les positions respectives de caractéristiques (16, 17) sont déterminées dans le relevé et la moyenne de celles-ci est ensuite calculée, un angle de basculement de la remorque (3) par rapport à une ligne de référence (18) qui s'étend entre les modèles de cible de référence (15) étant déterminé à partir des modèles de cible réels (23, 24) moyens des aux moins deux dispositifs de détection (10, 12).

7. Procédé selon la revendication 6, **caractérisé en ce que** la ligne de référence (18) est définie avant le démarrage du véhicule (2).

8. Procédé selon l'une des revendications précédentes, **caractérisé en ce qu'**un avertissement est généré à l'attention du conducteur en cas de dépassement d'une valeur de seuil de l'état de basculement.

9. Procédé selon l'une des revendications précédentes, **caractérisé en ce que** pour déterminer la position, un état de basculement de la remorque (3) autour de son axe vertical (C) est déterminé.

10. Procédé selon l'une des revendications précédentes, **caractérisé en ce qu'**une perte de pression d'air dans un pneu (16, 20) de la remorque (3) est déterminée en fonction de la détermination de l'état de basculement, et un avertissement spécifique est alors notamment généré à l'attention du conducteur.

11. Procédé selon l'une des revendications précédentes, **caractérisé en ce que** la détermination de l'état de basculement est effectuée lors d'une entrée en stationnement en marche arrière dans un emplacement de stationnement de l'attelage (1) composé du véhicule (2) et de la remorque (3).

12. Procédé selon la revendication 11, **caractérisé en ce que** l'entrée en stationnement est assistée automatiquement par un système d'assistance au stationnement et une trajectoire de stationnement est déterminée en fonction de l'état de basculement et/ou la trajectoire de stationnement est modifiée pendant la manoeuvre de stationnement en fonction d'un état de basculement.

13. Système d'assistance au conducteur pour un véhicule (2), lequel est configuré pour déterminer une position d'une remorque (3) accrochée à un véhicule (2) par rapport au véhicule (2), et comprend un premier et un deuxième dispositif de détection (10, 12) qui peuvent être montés sur des côtés longitudinaux (4, 5) opposés du véhicule (2) et au moyen desquels une zone à chaque fois formée sur des côtés opposés (6, 7) de la remorque (3) est balayée,
**caractérisé en ce que**
les dispositifs de détection (10, 12)
* sont configurés pour déterminer un état de basculement de la remorque (3) autour de son axe longitudinal (B), et
* sont configurés pour, avant la détermination de la position de la remorque (3) du point de vue d'un état de basculement, rechercher automatiquement des modèles de cible de référence (15) appropriés sur la remorque (3), au moyen desquels peut être déterminée la détermination de l'état de basculement, notamment en fonction de la configuration d'une remorque (3), et
* au moyen desquels, en vue de déterminer un état de basculement, un premier modèle de cible réel (23) du premier modèle de cible de référence (15) sur un premier côté (6) de la remorque (3) peut être détecté par le premier dispositif de détection (10) sur un premier côté (4) du véhicule (2), et un deuxième modèle de cible réel (24) correspondant au premier modèle de cible réel (23) du deuxième modèle de cible de référence sur un deuxième côté (7) de la remorque (3) peut être détecté par le deuxième dispositif de détection (12) sur un deuxième côté (5) du véhicule (2), les deux modèles de cible réels (23, 24) étant comparés et un état de basculement de la remorque (3) pouvant être déterminé en fonction de la comparaison.
